# EUROPÄISCHE PATENTSCHRIFT

(11) **EP 2 507 579 B1**
(45) Veröffentlichungstag und Bekanntmachung des Hinweises auf die Patenterteilung: **23.04.2014**
(21) Anmeldenummer: 10784807.9
(22) Anmeldetag: 01.12.2010
(51) Int. Cl.: F41G 1/34

(54) **VISIEREINRICHTUNG**
SIGHTING DEVICE
DISPOSITIF DE VISEUR

(30) Priorität: 02.12.2009 AT 19122009
(43) Veröffentlichungstag der Anmeldung: 10.10.2012
(73) Patentinhaber: KRISS International SA, 1260 Nyon (CH)
(72) Erfinder: PROFOS, Markus, CH-3020 Bern (CH)
(74) Vertreter: Reuteler, Raymond Werner
(86) Internationale Anmeldenummer: PCT/EP2010/068644
(87) Internationale Veröffentlichungsnummer: WO 2011/067291

(56) Entgegenhaltungen:
- GB-A- 1 201 779
- US-A- 3 641 676
- US-A1- 2009 013 581

## Beschreibung

Die Erfindung betrifft eine Visiereinrichtung, enthaltend zumindest eine selbstleuchtende Lichtquelle und zumindest einen Körper aus einem Licht leitenden und/oder Licht sammelnden Material, der Körper als Rohr oder Ring ausgebildet und die Lichtquelle zumindest abschnittsweise in dem Rohr oder Ring angeordnet ist.

Optische Visiereinrichtungen werden benutzt, um ein mit der Visiereinrichtung verbundenes Gerät auszurichten, indem die Achse der Visiereinrichtung mit einer Sichtachse ausgerichtet wird. Anwendung finden optische Visiereinrichtungen beispielsweise in Messgeräten, Kameras und Schusswaffen. Auch zum Ausrichten von Bauten oder Maschinen werden Visiereinrichtungen eingesetzt.

Optische Visiereinrichtungen sind in vielerlei verschiedenen Ausführungsarten bekannt, So kennt man Visiereinrichtungen die sich ausschliesslich für den Gebrauch bei Tageslicht eignen, beispielsweise die aus der US 5 850 700 A, bekannte Visiervorrichtung mit einer Linse, einen Rahmen und zwei von einander beabstandete Zielmarkierungen. Andere Visiereinrichtungen sind für den Einsatz in der Dämmerung oder bei Nacht konzipiert, indem sie beispielsweise eingebaute Leuchtmittel aufweisen, beispielsweise die aus der US 4 070 763 A bekannte, bei welcher ein Bündel von Lichtleiterfasern mit einer Lichtquelle beleuchtet wird.

Die meisten der zuletzt genannten Visiereinrichtungen eignen sich schlecht oder gar nicht für den Einsatz bei hellem Umgebungslicht, weil dieses Umgebungslicht die Leuchtkraft der eingebauten Leuchtmittel übersteigt und diese Leuchtmittel somit wirkungslos werden.

Das Dokument US2009/0013581 A1 zeigt eine Visiervorrichtung in Form einer U-Kimme und einem Korn. Hierbei wird in das Korn und in die freien Schenkel der Kimme je eine selbstleuchtende Lichtquelle eingesetzt. Die selbstleuchtende Lichtquelle ist in einem rohrförmigen lichtdurchlässigen Gehäuse eingesetzt. Weiters ist in Blickrichtung vor der Lichtquelle ein Lichtleiter aus einem optischen Fasermaterial angeordnet. Das Material dieses Lichtleiters ist fluoreszierend ausgebildet. Durch diese Anordnung soll sowohl bei hellem Umgebungslicht als auch bei schlechteren Sichtverhältnissen eine gute Sichtbarkeit der Visiervorrichtung erzielt werden. Allerdings ist es bei der bekannten Anordnung von Nachteil, dass sich durch die Anordnung der Faseroptik als lichtleitender Körper zahlreiche technische Probleme ergeben, welche von der Lichteinkopplung bis zur Lichtausbreitung in der Faser reichen. Darüber hinaus hat die bekannte Anordnung den Nachteil, dass bei geringem Umgebungslicht nur eine schlechte Lichtausbeute der Lichtquelle erzielt wird, da sich durch die zwischen Betrachter und Lichtquelle befindliche Faseroptik erhebliche Intensitätsverluste ergeben und ein direkter Blick auf die Lichtquelle von der Faseroptik verhindert wird.

Das Dokument US 3,641,676 betrifft eine Visiervorrichtung mit einer selbstleuchtenden Lichtquelle. Die selbstleuchtende Lichtquelle ist länglich ausgebildet und durch ein Röhrchen und eine darin befindliche radioaktive Substanz gebildet.

Die GB 1,201,779 hat eine Visiervorrichtung zum Gegenstand, bei welcher ein zu einem Torus gebogener mit einem radioaktiven Gas gefüllter Hohlkörper als Leuchtquelle in eine ringförmige Nut eines rohrförmigen Körpers eingesetzt wird. Der rohrförmige Körper ist darüber hinaus von einer lichtundurchlässigen Umhüllung umgeben

Die US 6 358 855 A zeigt eine Visiervorrichtung der eingangs genannten Art, wobei der Licht leitende Körper als faseroptisches Bauelement ausgebildet ist. Die Verwendung einer Faseroptik zahlreiche technische Probleme mit sich, die von der Lichteinkopplung bis zur Erzielung einer gewünschten Lichtausbreitung in der Faser reichen.

Ausgehend von diesem Stand der Technik liegt der Erfindung die Aufgabe zu Grunde, eine Visiereinrichtung vorzuschlagen, die sich für den Einsatz bei jeglichen Lichtverhältnissen eignet, das heisst sowohl bei hellem Tageslicht als auch in der Dämmerung und bei Nacht oder in dunklen Räumen.

Diese Aufgabe wird erfindungsgemäß dadurch gelöst, dass das Licht das über die Mantelfläche in das Rohr eindringt, gesammelt und zu den Stirnflächen geleitet ist und wobei das Material aus Polymethylacrylat besteht in das Moleküle eingebettet sind, die unter Einwirkung von Umgebungslicht fluoreszieren.

Die erfindungsgemässe Vorrichtung hat den Vorteil, dass der Benutzer, der in Achsrichtung in die Vorrichtung blickt, bei allen Lichtverhältnissen mindestens eine leuchtende Markierung sieht. Bei schwachem oder fehlendem Umgebungslicht ist es mindestens die Lichtquelle, die als leuchtender Punkt erscheint und bei starkem Umgebungslicht strahlt die dem Benutzer zugewandte Stirnseite des Körpers gesammeltes Licht ab. Im Übergangsbereich zwischen schwachem und starkem Umgebungslicht ist für den Benutzer sowohl die Lichtquelle als auch die leuchtende Stirnseite des Körpers sichtbar. Weiters hat die erfindungsgemäße Lösung den Vorteil, dass der genau in Richtung der Längsachse von der Seite des Rohres in die Visiereinrichtung blickende Benutzer durch das Innere des Rohres hindurch einen Ausschnitt der Lichtquelle in der Form eines zentralen, leuchtenden Punktes sieht, der dem lichten Querschnitt des Rohres entspricht. Die Lichtquelle ist von einer Ringfläche umgeben, wobei der Ring der Stirnfläche des Rohres entspricht. Wenn der Benutzer der Visiereinrichtung die Kreisringfläche und den Punkt wie genau konzentrisch sieht, blickt sein Auge genau in Richtung der Längsachse in die Visiereinrichtung. Somit lässt sich durch die erfindungsgemäße Lösung auch sehr gut eine Parallaxenabweichung korrigieren.

Gemäß einer sehr einfach herzustellenden und kostengünstigen Variante der Erfindung kann das Äußere des Rohrs unabgedeckt sein.

Eine andere Variante der Erfindung sieht vor, dass das Rohr zumindest abschnittsweise eine Ummantelung aus einem im sichtbaren Lichtbereich undurchsichtigem Material aufweist. Der von der Lichtquelle erzeugte Punkt kann in diesem Fall von zwei konzentrischen Ringen umgeben sein, wobei der innere Ring der Stirnfläche des Rohres entspricht und der äussere Ring durch einen Bereich der Ummantelung gebildet wird. Bei schwachem oder fehlendem Umgebungslicht sieht der Benutzer im inneren Ring durch die Mantelfläche geleitetes Licht der Lichtquelle, wobei der innere Ring heller als der äussere erscheint. Bei starkem Umgebungslicht wird das axial durch die Rohrmantelfläche geleitete Licht der Lichtquelle durch das Umgebungslicht überstrahlt. Dafür erscheint der innere Ring heller, weil die Stirnfläche des Rohres Teile des Umgebungslicht abstrahlt, die vom Rohr über dessen Mantelfläche aufgenommen werden. Der Benutzer sieht daher bei allen Lichtverhältnisse und korrekt ausgerichteter Visiereinrichtung stets einen zentralen, leuchtenden Punkt und einen den Punkt konzentrisch umgebenden, leuchtenden Ring.

Gemäß einer vorteilhaften Variante der Erfindung, die sich vor allem durch eine große Robustheit und eine einfache Herstellung auszeichnet, ist die Ummantelung aus einer rohrförmigen Metallhülse gebildet.

Vorteilhafterweise sind das Rohr oder der Ring aus Kunststoff gebildet. Auf diese Weise lassen sich neben einer großen Robustheit und Unempfindlichkeit gegenüber äußeren Einflüssen auch gute Lichtleitungseigenschaften verwirklichen.

Um Beschädigungen der Lichtquelle auf der einem Benutzer zugewandten Seite vermeiden zu können, wie sie beispielsweise durch Zerkratzen der Oberfläche der Lichtquelle entstehen können, kann das Rohr an einem einem Benutzer zugewandten Abschnitt mit einem transparenten Material verschlossen sein.

Günstigerweise ist das transparente Material in einen Endbereich der Metallhülse eingesetzt. Hierdurch kann auf einfache Weise eine besonders zuverlässige Befestigung des transparenten Materials erzielt werden.

Eine vorteilhafte Variante der Erfindung sieht vor, dass in dem Rohr zwischen der Lichtquelle und einer einem Benutzer zugewandten Lichtaustrittsseite zumindest ein Körper aus einem Licht brechenden Material, insbesondere eine Sammellinse, angeordnet ist. Durch die Anordnung eines Licht brechenden Körpers lässt sich beispielsweise eine gewünschte Intensitätsverteilung des emittierten Lichtes erzielen.

Besonders vorteilhafterweise kann das transparente Material, mit welchem das Rohr verschlossen ist, als Linse, insbesondere Sammellinse, ausgeformt sein. Auf diese Weise lässt sich eine Bündelung des von der Lichtquelle emittierten Lichtes und somit eine Verbesserung ihrer Sichtbarkeit erzielen.

Eine Variante der Erfindung sieht vor, dass die Lichtquelle zumindest radial zu ihrer Längserstreckung Licht abstrahlt. Bei dieser Ausführungsform der Erfindung kommt bevorzugterweise eine längliche Lichtquelle zum Einsatz. Die Abstrahlung von Licht radial zur ihrer Längserstreckung ermöglicht es, eine linienförmige Beleuchtung bzw. Markierung an der Visiereinrichtung zu realisieren, wodurch sich die Gestaltungsmöglichkeiten wesentlich erhöhen.

Eine vorteilhafte Weiterbildung der oben genannten Variante der Erfindung sieht vor, dass die Längserstreckung der Lichtquelle quer zu einer Visierrichtung angeordnet ist.

Eine besonders günstige Variante der Erfindung, welche sich vor allem für die Realisierung einer Lochkimme eignet, sieht vor, dass die Lichtquellen in einem Mantel des Rohres oder Ringes eingebettet sind. Hierbei können mehrere stabförmige Lichtquellen um eine Mittelachse des Rohres oder Ringes angeordnet sein. Gemäß der in diesem Absatz erwähnten Ausführungsform der Erfindung können die Lichtquellen in Form eines Polygons, insbesondere eines Vierecks, um die Mittelachse angeordnet sind.

Eine weitere Variante der Erfindung, welche ein sehr schnelles und präzises Visieren unabhängig von Umgebungslichtverhältnissen ermöglicht, sieht vor, dass die Visiereinrichtung eine Kimme und ein Korn aufweist, wobei das Korn eine längliche, selbst leuchtende Lichtquelle aufweist, die koaxial mit einem Rohr aus einem Licht leitenden oder Licht sammelnden Material angeordnet ist, und die Kimme zumindest zwei selbst leuchtende Lichtquellen aufweist.

Eine günstige Variante sieht hierbei vor, dass das Korn eine Lichtquelle und ein Rohr gemäß einem der Ansprüche 1 bis 6 aufweist. Auf diese Weise lässt sich neben einem einfachen Aufbau auch eine ausgezeichnete Sichtbarkeit und Zuverlässigkeit der Visiereinrichtung unabhängig von den Umgebungslichtverhältnissen gewährleisten.

Eine andere Variante der Erfindung sieht vor, dass das ein mindestens einen Teil der Mantelfläche des Rohrs des Korns umgebendes Gehäuse vorhanden ist, das aus einem durchsichtigen Material besteht, das sich vom Material des Rohres unterscheidet. Gemäß dieser Variante der Erfindung sieht der Benutzer bei einem Blick auf das Korn einen von der Lichtquelle des Korns erzeugten leuchtenden Punkt, der von zwei konzentrischen Ringen umgeben ist, wobei der innere Ring der Stirnfläche des Rohres entspricht und der äussere Ring durch einen Bereich des Gehäuses gebildet wird. Bei schwachem oder fehlendem Umgebungslicht sieht der Benutzer im äusseren Ring durch das Gehäuse geleitetes Licht der Lichtquelle, wobei der innere Ring dunkler als der äussere erscheint. Bei starkem Umgebungslicht wird das axial durch das Gehäuse geleitete Licht der Lichtquelle durch das Umgebungslicht überstrahlt. Dafür erscheint der innere Ring hell, weil die Stirnfläche des Rohres Teile des Umgebungslicht abstrahlt, die vom Rohr über dessen Mantelfläche aufgenommen werden. Der Benutzer sieht daher bei allen Lichtverhältnisse und korrekt ausgerichteter Visiereinrichtung stets einen zentralen, leuchtenden Punkt und mindestens einen den Punkt konzentrisch umgebenden, leuchtenden Ring.

Entsprechend einer besonders bevorzugten Variante der Erfindung kann die Kimme eine Lochkimme und gemäß den Ansprüche 8 bis 12 ausgebildet sein. Diese Variante der Erfindung zeichnet sich dadurch aus, dass dem Benutzer am Tag wie auch bei diffusem Licht und in der Nacht eine optimale Zielerfassung ermöglicht ist. Bei guten Lichtverhältnissen dient die erfindungsgemäße Kimme als Kontrastvisierung, d.h., dass bei der Zielerfassung das Korn scharf sichtbar auf dem unscharfen Ziel wahrgenommen wird, während der Ring der Lochkimme als unscharfer Kreis sich um Korn und Ziel mittig zentriert. Bei schlechten Lichtverhältnissen erscheint das Korn als beleuchteter Punkt, der von mindestens einem Kreis umgeben ist, woraus sich wieder ein Kontrast ergibt, allerdings ein beleuchteter. Die Technik des Zielens bleibt dieselbe, das Korn hebt sich scharf sichtbar als beleuchteter Punkt vom unscharfen Ziel ab und der unscharf ersichtliche beleuchtete Ring der Kimme wird gleichmäßig um Korn und Ziel zentriert.

Gemäß einer weiteren Variante der Erfindung kann die Kimme als U- oder V-Kimme ausgebildet sein, wobei beiderseits einer U- oder V-förmigen Vertiefung der Kimme je zumindest eine Lichtquelle angeordnet sein kann. Auch mit einer derartigen Ausführungsform lassen sich eine von den äußeren Lichtverhältnissen unabhängige, optimale Sichtbarkeit der Visiervorrichtung und eine zuverlässige Zielerfassung erreichen.

Weiters kann die Kimme zu beiden Seiten der U- oder V-förmigen Vertiefung je einen Körper aus einem Licht leitenden oder sammelnden Material aufweisen, der einen Lichteinkopplungsbereich zum Sammeln von Umgebungslicht aufweisen kann.

Eine optimale Beleuchtung der Kimme lässt sich dadurch erreichen, dass die Längserstreckungen der Lichtquellen der Kimme quer zu einer Visierrichtung verlaufen. Durch diese Anordnung der Lichtquellen ist es einem Benutzer sehr schnell möglich, ein Ziel zu erfassen, da die genaue Position der Vertiefung der Kimme rasch erfasst werden kann. Entsprechend einer Variante der Erfindung kann zumindest einer der Licht leitenden Körper einen T-förmigen Querschnitt aufweisen, wobei die Lichtquelle in einem Querbalken des T angeordnet sein kann.

Alternativ zu einem T-förmigen Querschnitt kann zumindest einer der Licht leitenden Körper auch zylinderförmig, insbesondere mit einer rechteckigen Grundfläche, ausgebildet sein.

Um eine gute und stabile Befestigung der Licht leitenden Körper und der Lichtquellen zu ermöglichen, kann die Kimme zu beiden Seiten ihrer zum Visieren dienenden U- bzw. V-förmigen Vertiefung je zumindest eine Halterung aufweisen, in welche ein stirnseitiger, die zumindest eine Lichtquelle enthaltender Endbereich des Körpers aus Licht leitendem Material einsetzbar ist.

Die Erfindung samt weiteren Vorteilen wird im Folgenden anhand einiger nicht einschränkender Ausführungsbeispiele näher erläutert, welche in den Zeichnungen dargestellt sind. In diesen zeigen:
- Fig. 1: einen Querschnitt durch eine erste Variante einer erfindungsgemäßen Visiereinrichtung;
- Fig. 2: eine einem Benutzer zugewandte Vorderansicht der Variante aus Fig. 1;
- Fig. 3: einen Querschnitt durch eine zweite Variante einer erfindungsgemäßen Visiereinrichtung;
- Fig. 4: eine einem Benutzer zugewandte Vorderansicht der Variante aus Fig. 3;
- Fig. 5: einen Querschnitt durch eine dritte Variante der Erfindung;
- Fig. 6: einen Querschnitt durch eine vierte Variante der Erfindung;
- Fig. 7: eine Vorderansicht einer fünften Variante einer erfindungsgemäßen Visiereinrichtung;
- Fig. 8: eine Seitenansicht der Visiereinrichtung aus Fig. 7;
- Fig. 9: eine Vorderansicht einer sechsten Variante der Erfindung;
- Fig. 10: eine erfindungsgemäße Visiereinrichtung mit Kimme und Korn;
- Fig. 11: eine perspektivische Vorderansicht einer Variante einer Kimme der Visiereinrichtung aus Fig. 10;
- Fig. 12: eine Seitenansicht eines Licht leitenden Körpers, der bei der in Fig. 10 dargestellten Variante der Erfindung zum Einsatz kommen kann;
- Fig. 13: eine Vorderansicht des Licht leitenden Körpers aus Fig. 11;
- Fig. 14: einen Längsschnitt durch eine Variante eines Korns der Visiereinrichtung aus Fig. 13;
- Fig. 15: eine Ansicht der Variante des Korns aus Fig. 14 in Einsichtrichtung bei schlechten Lichtverhältnissen;
- Fig. 16: eine Ansicht der Variante des Korns aus Fig. 14 in Einsichtrichtung bei guten Lichtverhältnissen;
- Fig. 17: einen Längsschnitt durch eine weitere Ausführungsart eines Korns der Visiereinrichtung aus Fig. 13;
- Fig. 18: einen Längsschnitt durch eine weitere Ausführungsart eines Korns der Visiereinrichtung aus Fig. 13;
- Fig. 19: eine Ansicht des Korns aus Fig. 18 in Einsichtrichtung;
- Fig. 20: einen Längsschnitt durch noch eine weitere Ausführungsart eines Korns der Visiereinrichtung aus Fig. 13 und
- Fig. 21: eine Ansicht des Korns aus Fig. 20 in Einsichtrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

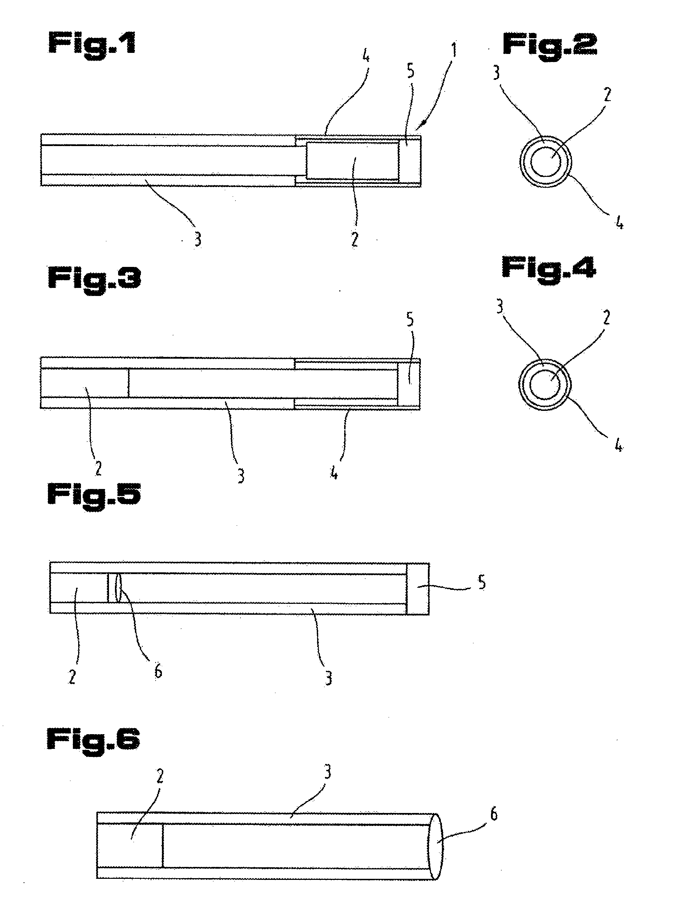

Gemäß Fig. 1 weist eine Ausführungsform einer erfindungsgemäßen Visiervorrichtung 1 mindestens eine selbstleuchtende Lichtquelle 2 auf, die abschnittsweise oder, wie hier dargestellt, zur Gänze in einem Rohr 3 angeordnet ist. Der Mantel des Rohres 3 ist aus einem Licht leitenden und/oder Licht sammelnden Material hergestellt, beispielsweise aus einem transparenten Kunststoff. Unter "Licht sammelnd" bzw. "Licht leitend" ist gemeint, dass Licht, das über die Mantelfläche in das Rohr eindringt, gesammelt und zu den Stirnflächen geleitet wird, die in diesem Fall die Form von Kreisringen haben. Ein solches Material kann beispielsweise Polymethylmethacrylat sein, das unter dem Handelsnamen Plexiglas bekannt ist und in das Moleküle eingebettet sein können, die das auf sie treffende Licht streuen oder die unter der Einwirkung von Umgebungslicht fluoreszieren. Durch Totalreflexion wird ein Grossteil des emittierten Lichts bis zu den Stirnflächen geleitet, wo es konzentriert austritt.

Die Lichtquelle 2 ist vorzugsweise eine selbstleuchtende, aktive Lichtquelle. Dabei kann es sich beispielsweise um ein Luftdicht verschlossenes Glasröhrchen, das auf der Innenseite mit einem Leuchtstoff beschichtet und mit gasförmigem Tritium gefüllt ist, handeln. Die vom Tritiumgas emittierten Elektronen aktivieren den Leuchtstoff permanent. Solche Lichtquellen sind beispielsweise unter dem Namen "Trigalight" bei der Firma MB Microtec in CH-3172 Niederwangen in verschiedenen Farben erhältlich. Die Erfindung ist grundsätzlich nicht auf einen bestimmten Spektralbereich beschränkt. So können je nach Anforderung Lichtquellen zum Einsatz kommen, welche in Spektralbereich von Infrarot bis Ultraviolett Licht emittieren. So können beispielsweise Grün, Orange oder infrarot emittierende Lichtquellen zum Einsatz kommen. Die Verwendung infraroter Lichtquellen kann beispielsweise in Zusammenhang mit dem Einsatz von Nachtsichtgeräten von Vorteil sein. Auch wenn die in dem hier gezeigten Ausführungsbeispiel dargestellten Lichtquellen die Form länglicher Röhrchen haben, so können zur Realisierung der Erfindung auch anders geformte Lichtquellen beispielsweise plättchenförmige Lichtquellen verwendet werden. Die Verwendung plättchenförmiger Lichtquellen kann insbesondere in Zusammenhang mit den weiter unten beschriebenen ringförmigen Ausführungsformen der Erfindung von Vorteil sein.

Die Lichtquelle 2 kann in dem Rohr 3 beispielsweise durch Kleben fixiert sein.

Wie aus Fig. 1 weiters ersichtlich ist, kann das das Rohr 3 zumindest abschnittsweise eine Ummantelung 4 aus einem im sichtbaren Lichtbereich undurchsichtigem Material aufweisen. An dieser Stelle sei jedoch erwähnt, dass das Rohr 3 auch unabgedeckt sein kann. D.h., dass die Oberfläche des gesamten Rohres 3 so wie in dem in Fig. 1 linken Abschnitt dargestellt auch nicht abgedeckt sein kann.

Die Ummantelung 4 kann aus Gründen der Robustheit und einfachen Herstellbarkeit in Form einer auf das Rohr 3 aufgesteckten Hülse, bevorzugterweise einer Metallhülse, ausgeführt sein. Allerdings wäre es auch denkbar anstelle einer Metallhülse auch eine Kunststoffhülse zu verwenden.

Das Rohr 3 kann an einem einem Benutzer zugewandten Abschnitt mit einem transparenten Material 5, beispielsweise Saphir, verschlossen sein, um die einem Benutzer zugewandte Seite der Lichtquelle 2 zu schützen. Das transparente Material 4 kann beispielsweise mit der Ummantelung 4 verklebt sein.

Entsprechend der Ausführungsform in Fig. 1 kann die Lichtquelle an dem in Einsichtrichtung vorderen Ende des Rohres 3 angeordnet sein.

Fig. 2 zeigt eine Draufsicht auf eine Stirnseite des Rohres 3 in Blickrichtung bzw. Visienichtung eines Benutzers. Wie man leicht erkennen kann, erscheint die Lichtquelle 2 als beleuchteter, färbiger Punkt, der von zwei konzentrischen ringförmigen Flächen umgeben ist. Die ringförmigen Flächen werden von den Stirnseite des Rohres 3 und der Ummantelung 4 gebildet. Das Rohr 3 kann aus einem Material gebildet sein, welches eine andere Farbe aufweist, als das von der Lichtquelle 2 emittierte Licht. Dies dient vor allem dazu um einen farblichen Kontrast zwischen der Lichtquelle 2 und der Stirnfläche des Rohres 3 zu schaffen. In dem Material des Rohres 3 können auch fluoreszierende Moleküle eingebettet sein, welche durch das Licht der Lichtquelle 2 oder Umgebungslicht angeregt werden können.

Die in Fig. 3 dargestellte Variante der Erfindung unterscheidet sich von der in Fig. 1 dargestellten Ausführungsform in erster Linie durch die Anordnung der Lichtquelle 2. In der hier gezeigten Anordnung ist die Lichtquelle 2 an dem einem Benutzer abgewandten Ende des Rohres 3 angeordnet. Auch bei dieser Variante der Erfindung ist das Rohr 3 benutzerseitig mit einem transparenten Material 5 abgeschlossen. Das benutzerseitige Ende weist ebenfalls eine Ummantelung 4 auf.

Wie aus Fig. 4 ersichtlich ist, ist das für einen Benutzer in Einsichtrichtung ersichtliche Bild gleich dem mit der aus Fig. 1 erzielbaren. Ein Unterschied kann in den Ausführungsformen der Fig. 1 und 3 jedoch darin gesehen werden, dass bei der in Fig. 3 dargestellten Variante die Lichtquelle 2 nur dann vollständig sichtbar ist, wenn die Blickrichtung des Betrachters in einer Linie mit der Längsmittelgeraden des Rohres 3 liegt, sodass eine Parallaxenabweichung mit dieser Ausführungsform korrigiert werden kann.

Gemäß Fig. 5 kann in dem Rohr 3 mindestens ein lichtbrechender Körper 6, bevorzugterweise eine Sammellinse, angeordnet sein. Bei Verwendung einer Sammellinse kann deren Brennweite so ausgelegt werden, dass eine maximale Helligkeit in etwa in dem Auge eines Betrachters liegt. Hierzu kann die Brennweite der Sammellinse so gewählt werden, dass der Brennpunkt bzw. die Brennebene in etwa auf der Netzhaut eines Benutzers liegen. Da der Abstand zwischen Auge und Lichtquelle 2 zumeist durch die verwendete Vorrichtung, beispielsweise ein Gewehr oder ein Entfernungsmessgerät fest vorgegeben ist, stellt die exakte Abstimmung der Linse kein Problem dar.

An dieser Stelle sei erwähnt, dass anstelle einer Sammellinse auch ein Linsensystem oder Prismen in dem Rohr 3 nach der Lichtquelle 2 angeordnet sein können, je nach gewünschter Verteilung der aus dem Rohr 3 benutzerseitig austretenden Intensitätsverteilung bzw. je nach gewünschtem Strahlverlauf des austretenden Lichtes.

Wie in Fig. 6 gezeigt kann der lichtbrechende Körper 6 anstelle des transparenten Materials 5 eingesetzt werden. Es sei erwähnt, dass natürlich auch der lichtbrechende Körper 6 aus einem transparenten Material gebildet ist.

Auch bei der in Fig. 6 gezeigten Variante bietet sich die Verwendung einer Sammellinse an, um das Licht zu fokusieren und somit die Intensität des in das Auge des Betrachters gelangenden Lichtes zu erhöhen.

In Bezug auf die in Fig. 5 und 6 gezeigten Ausführungsformen sei noch gesagt, dass diese günstigerweise miteinander kombiniert werden können, sodass sowohl im Inneren als auch am Ausgang des Rohres 3 lichtbrechende Körper 6 angeordnet sein können.

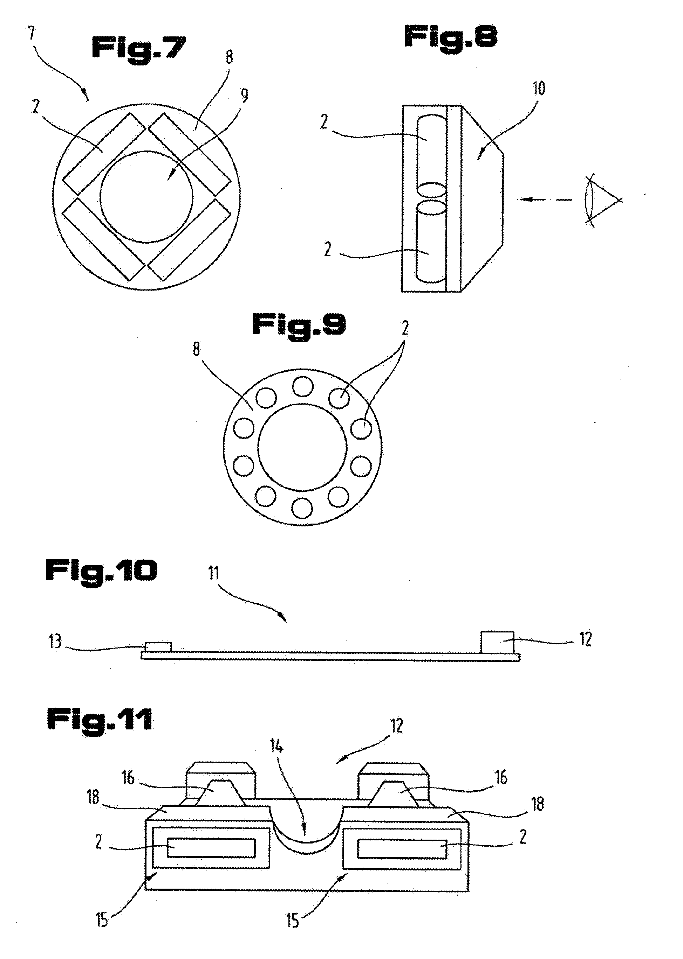

Gemäß Fig. 7 kann die erfindungsgemäße Vorrichtung 7 als Ring 8 ausgebildet sein. Wie aus Fig. aus 7 weiters ersichtlich ist, können die die Lichtquellen in einem Mantel des Ringes 8 eingebettet sein. Hierbei können mehrere stabförmige Lichtquellen 2 um eine Mittelachse des Ringes 8 angeordnet sein. Die Lichtquellen 2 können insbesondere in Form eines Polygons, insbesondere eines Vierecks, um die Mittelachse angeordnet sein, wobei die Längserstreckung jeder der Lichtquellen 2 quer zu einer Visierrichtung angeordnet sein kann. Die Lichtquellen 2 strahlen hierbei auch radial zu ihrer Längserstreckung Licht ab, sodass ein Betrachter ein beleuchtetes Viereck sieht, welches um eine Durchsichtsöffnung 9 angeordnet ist. Natürlich können auch mehr oder weniger Lichtquellen 2 um die Durchsichtsöffnung 9 angeordnet sein.

Anstelle der hier gezeigten stabförmigen Lichtquellen 2 können auch flächige Lichtquellen bei dieser Variante der Erfindung zum Einsatz kommen.

Gemäß Fig. 8 kann auch die in Fig. 7 dargestellte Variante der Erfindung einen ringförmigen Körper 10 mit konischen Außenwänden zum Einkoppeln von Umgebungslicht und zur Reflexion von Licht aufweisen, welches von den Lichtquellen emittiert wird. Als Material für den Ring 8 bzw. den Körper 10 kann ein transparentes Material, beispielsweise ein pigmentierter Kunststoff, verwendet werden.

Wie aus Fig. 9 ersichtlich können die Lichtquellen 2 stabförmig und parallel zu einer Achse des Ringes 8 angeordnet oder flächig ausgebildet sein.

Gemäß Fig. 10 kann eine erfindungsgemäße Visiervorrichtung 11 eine Kimme 12 und ein Korn 13 aufweisen.

Nach einer Variante der Erfindung kann die Kimme 12 als Lochkimme ausgebildet sein und mittels einer ringförmigen Visiervoirichtung 7, wie sie in den Figuren 7 bis 9 dargestellt ist realisiert sein. Als Korn 13 kann ein normales Korn oder auch eine rohrförmige Visiervorrichtung 1, wie sie in den Figuren 1 bis 6 dargestellt ist, verwendet werden. An dieser Stelle sei erwähnt, dass bei Verwendung eines Korns 13, wie es in den Figuren 1 bis 6 dargestellt ist, auch eine herkömmliche Kimme verwendet werden kann. Zu den in diesem Absatz genannten Ausführungsvarianten von Kimme 12 und Korn 13 alternative Ausführungsformen werden im Folgenden genannt.

Wie aus Fig. 11 ersichtlich ist, kann die Kimme 12 als U- oder V-Kimme ausgebildet sein, wobei beiderseits einer U- oder V-förmigen Vertiefung 14 der Kimme 12 je zumindest eine Lichtquelle 2 angeordnet sein kann. Die Längserstreckungen der Lichtquellen 2 der Kimme 12 verlaufen hierbei quer zu einer Visierrichtung.

Die Kimme kann zu beiden Seiten der U- oder V-förmigen Vertiefung 14 je einen Körper 15 aus einem Licht leitenden oder sammelnden Material aufweist, der einen Lichteinkopplungsbereich 16 zum Sammeln von Umgebungslicht aufweist.

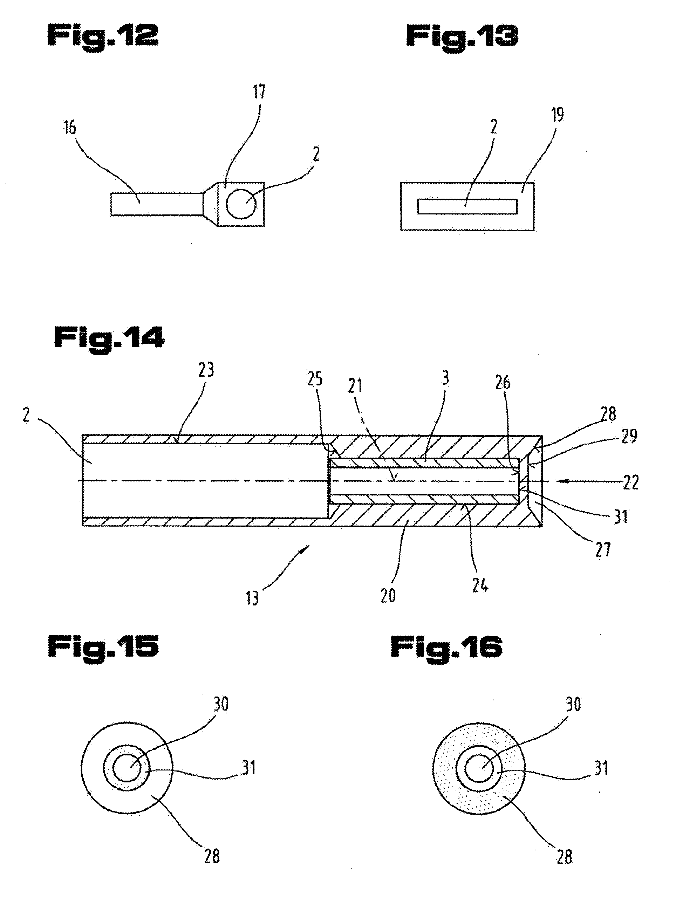

Die Licht leitenden Körper 15 können, wie in Fig. 12 dargestellt, beispielsweise je einen T-förmigen Querschnitt aufweisen, wobei die Lichtquelle 2 in einem Querbalken 17 des T angeordnet sein kann. So kann die Lichtquelle 2 beispielsweise in eine Bohrung des Licht leitenden Körpers 15 eingesetzt werden. Die Lichtquelle 2 kann beispielsweise in der Bohrung verklebt werden. Ein Verkleben kann auch entfallen, falls die Bohrung verschlossen wird, beispielsweise durch Ausgießen mit einem härtenden Material.

Alternativ zur Verwendung eines T-förmigen Körpers kann der Licht leitenden Körper 15 auch zylinderförmig, insbesondere mit einer rechteckigen Grundfläche, ausgebildet sein. An dieser Stelle sei erwähnt, dass der Licht leitende Körper 15 auch von jeder anderen geeigneten Grundform sein kann, beispielsweise trapez- oder dreieckförmig oder polygonal. Unter Grundform wird hierbei eine Grundfläche des Körpers 15 oder eine Normalprojektion des Körpers 15 in eine Ebene verstanden.

Weiters kann die Kimme 12 zu beiden Seiten ihrer zum Visieren dienenden U- bzw. V-förmigen Vertiefung 14 je zumindest eine Halterung 18 aufweisen, in welche ein stirnseitiger, die zumindest eine Lichtquelle 2 enthaltender Endbereich des Körpers 15 aus Licht leitendem Material einsetzbar ist. In Fig. 13, welcher ein frontale Ansicht des Körpers 15 darstellt ist dieser stirnseitige Endbereich mit dem Bezugszeichen 19 gekennzeichnet.

Anhand der Figuren 14 bis 21 werden weitere Varianten für das Korn 13 erläutert, welche erfindungsgemäß mit einer Kimme 12, wie sie in den Figuren 11 bis 13 oder 7 bis 9 dargestellt ist, zum Einsatz kommen können.

In Fig. 14 ist ein Ausführungsbeispiel für eine Variante des Korns 13 in einem Längsschnitt dargestellt. Mit der Bezugszahl 20 ist ein längliches Gehäuse bezeichnet, das in seinem Inneren weitere, nachfolgend beschriebenen Komponenten aufnimmt. Das Gehäuse ist vorzugsweise von kreiszylindrischer Gestalt und besteht aus einem glasklar durchsichtigen Werkstoff, beispielsweise Saphir. Mit 21 ist die Längsachse des Korns bezeichnet und mit dem Pfeil 22 die Einsichtrichtung, das heisst die Richtung, in der ein Benutzer in die Visiereinrichtung 11 hinein blickt. Ausgehend von der in Fig. 14 linken Stirnfläche des Gehäuses 20 weist dieses eine erste zylindrische Öffnung 23 auf, die etwa bis zur Längsmitte des Gehäuses reicht. Der Grund der ersten Öffnung 23 geht mit einem Kegelwinkel in eine zweite, kleinere zylindrische Öffnung 24 über. Durch den Kegelwinkel wird eine erste Schrägfläche 25 gebildet, welche die Form einer Innenfläche eines Kegelstumpfmantels hat. Der Grund der zweiten Öffnung 24 befindet sich nahe der in Fig. 14 rechten Stirnseite des Gehäuses 20 und wird durch eine ebene, kreisrunde, rechtwinklig zur Längsachse 21 angeordnete erste Bodenfläche 26 gebildet. In der in Fig. 14 rechten Stirnseite des Gehäuses 20 ist eine Vertiefung 27 angeordnet, die durch eine zweite Schrägfläche 28 und eine zweite Bodenfläche 29 gebildet wird. Die zweite Schrägfläche 28 hat dabei die Form einer Innenfläche eines Kegelstumpfmantels und die zweite Bodenfläche 29 ist eben, kreisrund und rechtwinklig zur Längsachse 21 ausgerichtet. Die erste Schrägfläche 25 und die zweite Schrägfläche 28 können, müssen aber nicht den gleichen Kegelwinkel aufweisen.

In der ersten Öffnung 23 ist die Lichtquelle 2 aufgenommen.

In der zweiten Öffnung 24 ist das Rohr 3 eingesetzt, das aus einem durchsichtigen, vorzugsweise eingefärbten Material besteht. Im hier Beschriebenen Ausführungsbeispiel ist das Material des Rohres 3 rot eingefärbt.

Fig. 15 zeigt eine Ansicht des Korns 13 in Einsichtrichtung 22 bei geringem Umgebungslicht oder völliger Dunkelheit. Das von der Lichtquelle 2 ausgestrahlte Licht gelangt einerseits durch den Hohlraum der Rohres 3 und erscheint in dieser Ansicht als beispielsweise grüner, kreisrunder Punkt 30 mit einem Durchmesser, der dem Innendurchmesser des Rohres 3 entspricht. Der Punkt 30 ist von einer Kreisringfläche umgeben, welche der Stirnfläche 31 des Rohres 3 entspricht. Diese Kreisringfläche 31 ist in diesem Beispiel mit einem Raster versehen und erscheint daher grau. Damit soll veranschaulicht werden, dass diese Kreisringfläche bei geringem oder fehlendem Umgebungslicht praktisch kein Licht abstrahlt und daher dunkel erscheint. Um zu vermeiden, dass die Kreisringfläche 31 Licht abstrahlt, das von der Lichtquelle 2 axial durch die Wandung des Rohres 3 geleitet wird, kann die der Lichtquelle 2 zugewandte Stirnfläche des Rohres 3 abgedeckt sein. Die Kreisringfläche 31 ist in Fig. 15 von einer weiteren Kreisringfläche umgeben, welche der zweiten Schrägfläche 28 entspricht. Diese weitere Kreisringfläche 28 strahlt Licht ab, das von der Lichtquelle 2 durch die erste Schrägfläche 25 in das Material des Gehäuses 20 eindringt, dort durch Totalreflexion weitergeleitet wird und an der zweiten Schrägfläche 28 austritt. Wenn der Benutzer der Visiereinrichtung die Kreisringfläche 28 und den Punkt 30 wie in Fig. 15 genau konzentrisch sieht, blickt sein Auge genau in Richtung der Längsachse 21 in die Visiereinrichtung.

Fig. 16 zeigt eine Ansicht des Korns 13 in Einsichtrichtung 22 bei relativ hellem Umgebungslicht, beispielsweise bei Tageslicht. Das von der Lichtquelle 2 ausgestrahlte Licht gelangt durch den Hohlraum des Rohres 3 und erscheint auch in dieser Ansicht beispielsweise als grüner, kreisrunder Punkt 30 mit einem Durchmesser, der dem Innendurchmesser des Rohres 3 entspricht. Wie beim Beispiel gemäss Fig. 15 ist der Punkt 30 von einer Kreisringfläche umgeben, welche der Stirnfläche des Rohres 3 entspricht. Diese Kreisringfläche 31 erscheint in diesem Beispiel beispielsweise leuchtend rot, weil der Licht sammelnde Kunststoff des Rohres 3 das durch die Mantelflächen des Gehäuses 20 und des Rohres 3 dringende Umgebungslicht sammelt und an der Stirnfläche 31 konzentriert abgibt. Dieser Effekt kann noch verstärkt werden, wenn die der Lichtquelle 2 zugewandte Stirnfläche des Rohres 3 mit einer Verspiegelung versehen wird, die darauf auftreffendes Licht in die Wandung des Rohres zurückwirft. Die weitere Kreisringfläche, welche der zweiten Schrägfläche 28 entspricht und die Kreisringfläche 31 umgibt, ist in diesem Beispiel mit einem Raster versehen und erscheint daher grau. Damit soll veranschaulicht werden, dass diese Kreisringfläche beispielsweise bei Tageslicht dunkler erscheint als die rot leuchtende Kreisringfläche 31, obwohl natürlich auch aus ihr von der grünen Lichtquelle stammendes Licht austritt, wie dies oben im Zusammenhang mit Fig. 15 beschrieben wurde. Wenn der Benutzer der Visiereinrichtung die Kreisringfläche 31 ünd den Punkt 30 wie in Fig. 16 genau konzentrisch sieht, blickt sein Auge genau in Richtung der Längsachse 22 in die Visiereinrichtung 11.

Ein besonderer Vorteil der erfindungsgemässen Visiereinrichtung 11 besteht darin, dass sie bei allen Lichtverhältnissen übergangslos verwendbar ist. Der Punkt 30 ist bei allen Lichtverhältnissen gut sichtbar, weil er dem direkten Blick auf die Lichtquelle 2 entspricht und sich farblich von der ihn direkt umgebenden Kreisringfläche 31 unterscheidet. Bei guten Lichtverhältnissen ist die Kreisringfläche 31 durch das von ihr abgestrahlte Licht gut sichtbar, wobei sie umso heller leuchtet, je stärker das Umgebungslicht ist. Bei schlechten Lichtverhältnissen, insbesondere wenn das Umgebungslicht schwächer ist als das von der Lichtquelle 2 angestrahlte Licht, ist die äussere Kreisringfläche 28 deutlich sichtbar. Auch wenn diese die gleiche Farbe hat wie der Punkt 30, ist sie doch durch die dazwischenliegende, andersfarbige Kreisringfläche 31 deutlich vom Punkt 30 abgegrenzt.

Mögliche Abmessungen des Korns 13 sind beispielsweise wie folgt. Das Gehäuse 20 kann einen Durchmesser von 5 mm und eine Länge von 25 mm haben. Die Lichtquelle 2 kann einen Durchmesser von 4 mm und eine Länge von 13 mm haben. Das Rohr 3 kann einen Aussendurchmesser von 2,5 und einen Innendurchmesser von 1,5 mm haben. Diese Abmessungen sind rein beispielsweise gemeint und sollen den Schutzumfang der Patentansprüche in keiner Weise einschränken.

In Abweichung zum vorangehend beschriebenen und in den Zeichnungsfiguren dargestellten Ausführungsbeispiel kann beispielsweise das Gehäuse 20 nur in dem Bereich aus dem angegebenen durchsichtigen Material bestehen, der das Rohr 3 umgibt. Der die Lichtquelle 2 umgebende Bereich des Gehäuses kann aus einem anderen Material bestehen oder im Extremfall sogar fehlen. Auf die zweite Schrägfläche 28 kann prinzipiell verzichtet werden, der stirnseitige Bereich des Gehäuses 20 zwischen dem Aussendurchmesser des Gehäuses und dem Aussendurchmesser des Rohres 3 würde in der Draufsicht gemäss Fig. 15 trotzdem als Kreisringfläche erscheinen. Durch die Schrägfläche 28 wird jedoch diese Kreisringfläche schärfer begrenzt. Die zweite Öffnung 24 muss nicht wie dargestellt als Sacklochbohrung ausgestaltet sein, sondern kann auch eine Durchgangsbohrung sein, wobei die Stirnfläche des Rohres 3 gegenüber der Stirnfläche des Gehäuses zurückversetzt sein kann, mit dieser bündig sein kann oder über diese vorstehen kann. Die gezeigte Ausgestaltung erleichtert aber insbesondere die vollständige Abdichtung des Gehäuses und damit den Schutz gegen eindringende Stoffe wie Schmutz und Feuchtigkeit.

Die oben beschriebenen geometrischen Formen eignen sich besonders gut, um die Längsachse 22 der Visiereinrichtung 11 mit der Blickrichtung eines Benutzers auszurichten. Jedoch müssen Gehäuse 20, die Lichtquelle 2 und das Rohr 12 nicht zwingend kreisrund sein, sondern es sind auch andere Querschnittsformen denkbar, um den Zweck der Visiereinrichtung zu erfüllen.

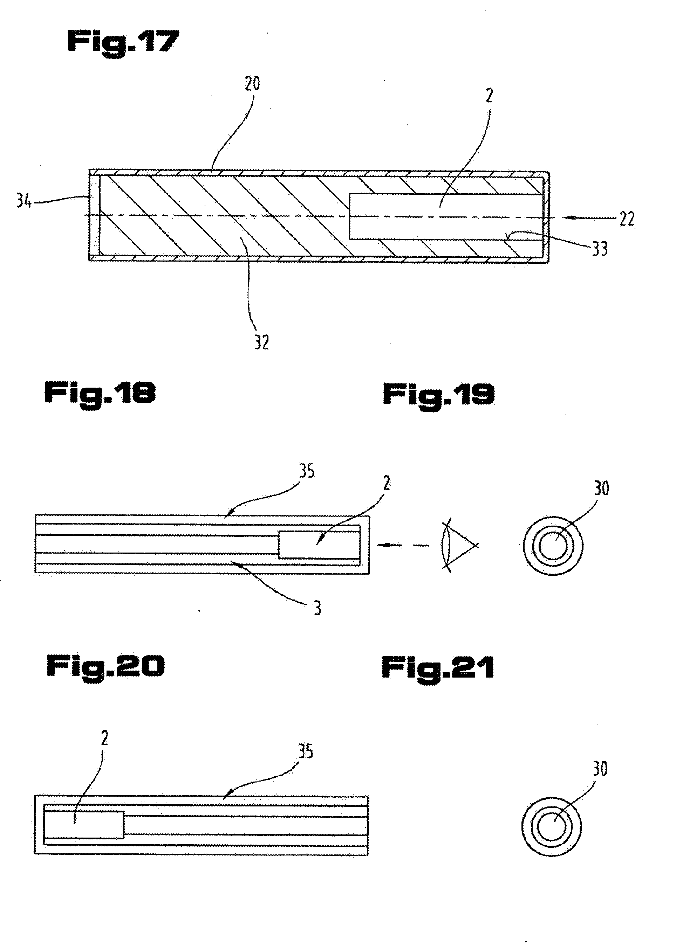

Fig. 17 zeigt eine besonders einfache Ausführungsart der erfindungsgemässen Vorrichtung. In einem Gehäuse 20, das hier als Glasröhrchen ausgebildet ist, ist ein Körper 32 aus einem Licht leitenden und/oder Licht sammelnden Material angeordnet. Die Bezugszahl 22 bezeichnet auch bei diesem Beispiel die Einsichtrichtung. Der Körper 32 hat an der in Fig. 17 rechten Stirnseite eine Bohrung 33, in der eine Lichtquelle 2 aufgenommen ist. Auf der gegenüberliegenden Seite, in der Figur links, ist das Gehäuse mit einem Verschluss 34 dicht verschlossen, beispielsweise durch Ausgiessen mit Silikon. Anders als beim vorangehend beschriebenen Ausführungsbeispiel tritt beim Beispiel nach Fig. 17 kein durch einen axialen Versatz der jeweils zum Benutzer hin orientierten Stirnfläche der Lichtquelle 2 und des Körpers 32 bedingter Parallaxeffekt auf, wenn man nicht genau in Achsrichtung in die Visiereinrichtung schaut. Somit ist diese Ausführungsart für Anwendungen weniger geeignet, bei denen es um eine hohe Präzision beim Visieren geht. Dafür ist sie einfacher und kostengünstiger herzustellen.

Fig. 18 zeigt eine Variante des Korns 13 der Visiereinrichtung 11, bei welcher das Korn 13 ein Gehäuse 35 aus einem durchsichtigen Material, beispielsweise Kunststoff aufweist, wobei das Gehäuse in Form einer Sackbohrung ausgebildet ist. In das Gehäuse 35 ist das Rohr 3 eingesetzt. An der dem Benutzer zugewandten, geschlossenen Seite des Gehäuses 35 ist die Lichtquelle 2 angeordnet. Für einen Betrachter, der in Visierrichtung auf das Korn 13 blickt stellt sich dessen Stirnseite wir in Fig. 19 dargestellt dar. In der Mitte ist der von der Lichtquelle erzeugte, leuchtende Punkt 30 erkennbar, der von zwei konzentrischen Kreisen unterschiedlicher Färbung umgeben ist. Diese Kreise werden durch an den Stirnflächen des Rohres bzw. der Gehäusewandung austretendes Licht hervorgerufen.

Die in Fig. 20 dargestellte Variante unterscheidet sich von der in Fig. 18 gezeigten Ausführungsform in erster Linie durch die Anordnung der Lichtquelle 2 in einem in Visierrichtung gesehen dem Betrachter weiter entfernten Ende des Gehäuses 35. Wie aus Fig. 21 ersichtlich ist, wird auch mit der Ausführungsform nach Fig. 20 die gleiche Frontalansicht aus Sicht des Betrachters erzeugt wie mit der Ausführungsform nach Fig. 18.

An dieser Stelle sei erwähnt, dass ein Betrachter der durch die Kimme 12 auf das Korn 13 blickt neben der in Fig. 15, 16 und 19, 21 dargestellten Stirnseiten des Korns noch die beleuchteten Umrisse der Kimme, die sich unscharf sich um Korn und Ziel mittig zentrieren, wahrnimmt.

### Bezugszeichenaufstellung

- 1: Visiervorrichtung
- 2: Lichtquelle
- 3: Rohr
- 4: Ummantelung
- 5: Transparentes Material

- 6: lichtbrechender Körper
- 7: Vorrichtung
- 8: Ring
- 9: Durchsichtsöffnung
- 10: Lichtsammelkörper

- 11: Visiervorrichtung
- 12: Kimme
- 13: Korn
- 14: U- oder V-förmige Vertiefung
- 15: Körper

- 16: Lichteinkopplungsbereich
- 17: Querbalken
- 18: Halterung
- 19: stirnseitiger Endbereich
- 20: längliches Gehäuse

- 21: Längsachse
- 22: Einsichtrichtung
- 23: erste Öffnung
- 24: zweite Öffnung
- 25: erste Schrägfläche

- 26: erste Bodenfläche
- 27: Vertiefung
- 28: zweite Schrägfläche
- 29: zweite Bodenfläche
- 30: Punkt

## Patentansprüche

1. Visiereinrichtung (1, 11), enthaltend zumindest eine selbstleuchtende Lichtquelle (2) und zumindest einen Körper aus einem Licht leitenden und/oder Licht sammelnden Material, wobei der Körper als Rohr (3) oder Ring (8) ausgebildet und die Lichtquelle (2) zumindest abschnittsweise in dem Rohr (3) oder Ring (8) angeordnet ist, wobei das Licht das über die Mantelfläche des Rohres (3) oder Ringes (8) in das Rohr (3) oder den Ring (8) eindringt, gesammelt und zu den Stirnflächen des Rohres (3) oder Ringes (8) geleitet wird und wobei das Material aus Polymethylacrylat besteht, in das Moleküle eingebettet sind, die unter Einwirkung von Umgebungslicht fluoreszieren.

2. Visiereinrichtung nach Anspruch 1, **dadurch gekennzeichnet, dass** das Äußere des Rohrs (3) unabgedeckt ist.

3. Visiereinrichtung nach Anspruch 1, **dadurch gekennzeichnet, dass** das Rohr (3) zumindest abschnittsweise eine Ummantelung (4) aus einem im sichtbaren Lichtbereich undurchsichtigem Material aufweist.

4. Visiereinrichtung nach Anspruch 3, **dadurch gekennzeichnet, dass** die Ummantelung (4) aus einer rohrförmigen Metallhülse gebildet ist.

5. Visiereinrichtung nach einem der Ansprüche 3 oder 4, **dadurch gekennzeichnet, dass** das Rohr (3) an einem einem Benutzer zugewandten Abschnitt mit einem transparenten Material (5) verschlossen ist.

6. Visiereinrichtung nach den Ansprüchen 4 und 5, **dadurch gekennzeichnet, dass** das transparente Material (5) in einen Endbereich der Metallhülse eingesetzt ist.

7. Visiereinrichtung nach einem der Ansprüche 1 bis 6, **dadurch gekennzeichnet, dass** in dem Rohr (3) zwischen der Lichtquelle (2) und einer einem Benutzer zugewandten Lichtaustrittsseite zumindest ein Körper (6) aus einem Licht brechenden Material, insbesondere eine Sammellinse, angeordnet ist.

8. Visiereinrichtung nach Anspruch 5 oder 6, **dadurch gekennzeichnet, dass** das transparente Material (5) als Linse, insbesondere Sammellinse, ausgeformt ist.

9. Visiereinrichtung nach einem der Ansprüche 1 bis 8, **dadurch gekennzeichnet, dass** die Lichtquelle (2) zumindest radial zu ihrer Längserstreckung Licht abstrahlt.

10. Visiereinrichtung nach dem Anspruch 7, **dadurch gekennzeichnet, dass** die Längserstreckung der Lichtquelle (2) quer zu einer Visierrichtung angeordnet ist.

11. Visiereinrichtung nach Anspruch 10, **dadurch gekennzeichnet, dass** die Lichtquelle (2) in einem Mantel des Rohres (3) oder Ringes (8) eingebettet ist.

12. Visiereinrichtung nach Anspruch 11, **dadurch gekennzeichnet, dass** mehrere stabförmige Lichtquellen (2) um eine Mittelachse des Rohres (3) oder Ringes (8) angeordnet sind.

13. Visiereinrichtung nach Anspruch 12, **dadurch gekennzeichnet, dass** die Lichtquellen (2) in Form eines Polygons, insbesondere eines Vierecks, um die Mittelachse angeordnet sind.

14. Visiereinrichtung nach einem der Ansprüche 1 bis 13, **dadurch gekennzeichnet, dass** sie eine Kimme (12) und ein Korn (13) aufweist, wobei das Korn (13) eine längliche, selbst leuchtende Lichtquelle (2) aufweist, die koaxial mit einem Rohr (3) aus einem Licht leitenden oder Licht sammelnden Material angeordnet ist, und die Kimme (12) zumindest zwei selbst leuchtende Lichtquellen (2) aufweist, wobei das Korn (13) eine Lichtquelle (2) und ein Rohr (3) gemäß einem der Ansprüche 1 bis 8 aufweist.

15. Visiereinrichtung nach Anspruch 14, **dadurch gekennzeichnet, dass** das ein mindestens einen Teil der Mantelfläche des Rohrs (3) des Korns (13) umgebendes Gehäuse (35) vorhanden ist, das aus einem durchsichtigen Material besteht, das sich vom Material des Rohres (3) unterscheidet.

16. Visiereinrichtung nach einem Anspruch 14 oder 15, **dadurch gekennzeichnet, dass** die Kimme (12) eine als Ring (8) ausgeführte Lochkimme ist, wobei mehrere stabförmige, selbstleuchtende Lichtquellen (2) in einem Mantel des Ringes (8) eingebettet und um eine Mittelachse des Ringes angeordnet sind.

17. Visiereinrichtung nach einem der Ansprüche 14 oder 15, **dadurch gekennzeichnet, dass** die Kimme (12) als U- oder V-Kimme ausgebildet ist, wobei beiderseits einer U- oder V-förmigen Vertiefung (14) der Kimme (12) je zumindest eine Lichtquelle (2) angeordnet ist

18. Visiereinrichtung nach Anspruch 17, **dadurch gekennzeichnet, dass** die Kimme (12) zu beiden Seiten der U- oder V-formigen Vertiefung (14) je einen Körper (15) aus einem Licht leitenden oder sammelnden Material aufweist, der einen Lichteinkopplungsbereich (16) zum Sammeln von Umgebungslicht aufweist.

19. Visiereinrichtung nach einem der Ansprüche 17 oder 18, **dadurch gekennzeichnet, dass** die Längserstreckungen der Lichtquellen (2) der Kimme (12) quer zu einer Visierrichtung verlaufen.

20. Visiereinrichtung nach den Ansprüchen 18 und 19, **dadurch gekennzeichnet, dass** zumindest einer der Licht leitenden Körper (15) einen T-förmigen Querschnitt aufweist, wobei die Lichtquelle (2) in einem Querbalken (17) des T angeordnet ist.

21. Visiereinrichtung nach Anspruch 20, **dadurch gekennzeichnet, dass** zumindest einer der Licht leitenden Körper (15) zylinderförmig, insbesondere mit einer rechteckigen Grundfläche, ausgebildet ist.

## Claims

1. Sighting device (1, 11), containing at least one self-illuminating light source (2) and at least one body in a light-conducting and/or light-collecting material, the body in the form of a tube (3) or ring (8) and the light source (2) being arranged at least in a portion of the tube (3) or ring (8), whereby the light which penetrates into the tube (3) or the ring (8) through the lateral surface of the tube (3) or ring (8) is collected and led to the front surface of the tube (3) or ring (8), and whereby the material is polymethyl acrylate, in which molecules are embedded that fluoresce under the action of ambient light.

2. Sighting device according to Claim 1, **characterized in that** the exterior of the tube (3) is uncovered.

3. Sighting device according to Claim 1, **characterized in that** the tube (3), at least in part, has a jacket (4) in a material opaque in the visible light range.

4. Sighting device according to Claim 3, **characterized in that** the jacket (4) is formed from a tubular metal sleeve.

5. Sighting device according to one of Claims 3 or 4, **characterized in that** the tube (3) is closed by a transparent material (5) on a portion facing towards a user.

6. Sighting device according to Claims 4 and 5, **characterized in that** the transparent material (5) is arranged in an end region of the metal sleeve.

7. Sighting device according to one of Claims 1 to 6, **characterized in that** in the tube (3) between the light source (2) and a light exit side facing towards a user is arranged at least one body (6) consisting of a light-refracting material, in particular a collecting lens.

8. Sighting device according to Claim 5 or 6, **characterized in that** the transparent material (5) is shaped as a lens, in particular a collecting lens.

9. Sighting device according to one of Claims 1 to 8, **characterized in that** the light source (2) radiates at least radially with respect to its longitudinal extension.

10. Sighting device according to Claim 7, **characterized in that** the longitudinal extension of the light source (2) is arranged transverse to a sighting direction.

11. Sighting device according to Claim 10, **characterized in that** the light source (2) is embedded in a jacket of the tube (3) or ring (8).

12. Sighting device according to Claim 11, **characterized in that** a number of rod-shaped light sources (2) are arranged around a central axis of the tube (3) or ring (8).

13. Sighting device according to Claim 12, **characterized in that** the light sources (2) are arranged around the middle axis in the form of a polygon, in particular of a quadrangle.

14. Sighting device according to one of Claims 1 to 13, **characterized in that** it has a rear sight (12) and a front sight (13), the front sight (13) having an elongate, self-illuminating light source (2), which is arranged co-axially with a tube (3) of a light-conducting or light-collecting material, and the rear sight (12) having at least two self-illuminating light sources (2), the front sight (13) having a light source (2) and a tube (3) according to any of Claims 1 to 8.

15. Sighting device according to Claim 14, **characterized in that** a housing (35) surrounding at least a part of the lateral surface of the tube (3) of the front sight (13) is present in a transparent material that differs from the material of the tube (3).

16. Sighting device according to Claim 14 or 15, **characterized in that** the rear sight (12) is an eye rear sight designed as a ring (8), a number of rod-like self-illuminating light sources (2) being embedded in a jacket of the ring (8) and arranged around a central axis of the ring.

17. Sighting device according to Claim 14 or 15, **characterized in that** the rear sight (12) is designed as a U- or V-rear sight, at least one light source (2) each being arranged on both sides of a U- or V-shaped indentation (14) of the rear sight (12).

18. Sighting device according to Claim 17, **characterized in that** the rear sight (12), on both sides of the U- or V-shaped indentation (14) each has a body (15) of a light-conducting or -collecting material, which has a light-coupling region (16) for collecting ambient light.

19. Sighting device according to Claim 17 or 18, **characterized in that** the longitudinal extensions of the light sources (2) of the rear sight (12) run transverse to a sighting direction.

20. Sighting device according to Claim 18 and 19, **characterized in that** at least one of the light-conducting bodies (15) has a T-shaped cross-section, the light source (2) being arranged in a crossbeam (17) of the T.

21. Sighting device according to Claim 20, **characterized in that** at least one of the light-conducting bodies (15) is designed to be cylindrical, in particular with a rectangular base surface.

## Revendications

1. Dispositif de visée (1, 11), comprenant au moins une source lumineuse (2) à luminescence et au moins un corps en matériau photoconducteur et/ou photocapteur, le corps étant réalisé sous forme de tube (3) ou d'anneau (8), et la source lumineuse (2) étant disposée au moins en partie dans le tube (3) ou l'anneau (8), la lumière pénétrant dans le tube (3) ou l'anneau (8) par la surface périphérique du tube (3) ou de l'anneau (8), étant captée et conduite vers les surfaces frontales du tube (3) ou de l'anneau (8), et le matériau étant en polyacrylate de méthyle où sont incorporées des molécules fluorescentes sous l'effet de la lumière ambiante.

2. Dispositif de visée selon la revendication 1, **caractérisé en ce que** l'extérieur du tube (3) n'est pas recouvert.

3. Dispositif de visée selon la revendication 1, **caractérisé en ce que** le tube (3) comporte au moins partiellement une enveloppe (4) en un matériau transparent dans la plage de lumière visible.

4. Dispositif de visée selon la revendication 3, **caractérisé en ce que** l'enveloppe (4) est formée par une gaine métallique tubulaire.

5. Dispositif de visée selon la revendication 3 ou 4, **caractérisé en ce que** le tube (3) est obturé par un matériau transparent (5) sur une section opposée à un utilisateur.

6. Dispositif de visée selon les revendications 4 et 5, **caractérisé en ce que** le matériau transparent (5) est mis en place dans une partie d'extrémité de la gaine métallique.

7. Dispositif de visée selon l'une des revendications 1 à 6, **caractérisé en ce qu'**au moins un corps (6) en matériau réfracteur, en particulier une lentille convergente, est disposé dans le tube (3) entre la source lumineuse (2) et un côté de sortie de la lumière opposé à un utilisateur.

8. Dispositif de visée selon la revendication 5 ou 6, **caractérisé en ce que** le matériau transparent (5) est formé comme une lentille, en particulier une lentille convergente.

9. Dispositif de visée selon l'une des revendications 1 à 8, **caractérisé en ce que** la source lumineuse (2) diffuse la lumière au moins dans la direction radiale à son extension longitudinale.

10. Dispositif de visée selon la revendication 7, **caractérisé en ce que** l'extension longitudinale de la source lumineuse (2) est disposée transversalement à une direction de visée.

11. Dispositif de visée selon la revendication 10, **caractérisé en ce que** la source lumineuse (2) est logée dans une enveloppe du tube (3) ou de l'anneau (8).

12. Dispositif de visée selon la revendication 11, **caractérisé en ce que** plusieurs sources lumineuses (2) en forme de tige sont disposées autour d'un axe central du tube(3) ou de l'anneau (8).

13. Dispositif de visée selon la revendication 12, **caractérisé en ce que** les sources lumineuses (2) sont disposées autour de l'axe central en formant un polygone, en particulier un carré.

14. Dispositif de visée selon l'une des revendications 1 à 13, **caractérisé en ce qu'**il comprend un cran de mire (12) et un guidon (13), le guidon (13) comportant une source lumineuse (2) à luminescence oblongue, disposée coaxialement à un tube (3) en matériau photoconducteur ou photocapteur, et le cran de mire (12) comportant au moins deux sources lumineuses (2) à luminescence, le guidon (13) comportant une source lumineuse (2) et un tube (3) selon l'une des revendications 1 à 8.

15. Dispositif de visée selon la revendication 14, **caractérisé en ce qu'**un boîtier (35) entourant au moins une partie de la surface périphérique du tube (3) du guidon (13) est présenté, lequel est composé d'un matériau transparent différent du matériau du tube (3).

16. Dispositif de visée selon la revendication 14 ou 15, **caractérisé en ce que** le cran de mire (12) est un oeilleton réalisé comme anneau (8), plusieurs sources lumineuses (2) à luminescence en forme de tige étant logées dans une enveloppe de l'anneau (8) disposées autour d'un axe central ou de l'anneau.

17. Dispositif de visée selon la revendication 14 ou 15, **caractérisé en ce que** le cran de mire (12) est réalisé comme cran de mire en U ou en V, au moins une source lumineuse (2) étant disposée de part et d'autre d'un évidement (14) en U ou en V du cran de mire (12).

18. Dispositif de visée selon la revendication 17, **caractérisé en ce que** le cran de mire (12) comporte sur chacun des deux côtés de l'évidement (14) en U ou en V un corps (15) en matériau photoconducteur ou photocapteur, lequel présente une zone de couplage lumineux (16) pour la convergence de la lumière ambiante.

19. Dispositif de visée selon la revendication 17 ou 18, **caractérisé en ce que** les extensions longitudinales des sources lumineuses (2) du cran de mire (12) sont transversales à une direction de visée.

20. Dispositif de visée selon les revendications 18 et 19, **caractérisé en ce qu'**au moins un des corps photoconducteurs (15) présente une section transversale en T, la source lumineuse (2) étant disposée dans une barre transversale (17) du T.

21. Dispositif de visée selon la revendication 20, **caractérisé en ce qu'**au moins un des corps photoconducteurs (15) est réalisé en forme de cylindre, en particulier avec une surface de base rectangulaire.
